# EUROPÄISCHE PATENTSCHRIFT

(11) **EP 0 818 371 B1**
(45) Veröffentlichungstag und Bekanntmachung des Hinweises auf die Patenterteilung: **19.03.2003**
(21) Anmeldenummer: 97110111.8
(22) Anmeldetag: 20.06.1997
(51) Int. Cl.: B60R 22/26

(54) **Vorrichtung zur Befestigung eines Sicherheitsgurtes**
Fixation device for safety seat belt
Agencement de fixation d'une ceinture de sécurité

(30) Priorität: 11.07.1996 DE 19627914
(43) Veröffentlichungstag der Anmeldung: 14.01.1998
(60) Teilanmeldung: 02013053.0
(73) Patentinhaber: Volkswagen Aktiengesellschaft, 38436 Wolfsburg (DE)
(72) Erfinder: Kirchhoff, Heiko, 38444 Wolfsburg (DE); Lorenz, Karl-Dieter, 38446 Wolfsburg (DE); Dilger, Erich, Dilp.-Ing., 38442 Wolfsburg (DE); Schweissgut, Jakob, Dipl.-Ing., 38542 Leiferde (DE)
(74) Vertreter: Liebl, Thomas, Dipl.-Ing.

(56) Entgegenhaltungen:
- DE-A- 3 829 824
- FR-A- 2 471 793

## Beschreibung

Die Erfindung betrifft eine Vorrichtung zur Befestigung eines Sicherheitsgurtes gemäß dem Oberbegriff des Patentanspruchs 1.

Aus der DE-38 29 824-A1 (B60R 22/26) und der DE-OS 27 42 668 (A62B 35/02) sind Fahrzeugsitze bekannt, bei denen als. Funktionsteil des Sicherheitsgurtes ein Gurtschloss über ein Halteteil zumindest mittelbar an dem Fahrzeugsitz befestigt ist. Bei Überschreitung einer vorgegebenen Gurtkraft werden die Rastelemente aus ihrer Ruhestellung heraus mit einer Rastschiene in Eingriff gebracht, die fahrzeugfest am Fahrzeugaufbau gehalten ist. Derartige Konzepte haben den Vorteil, dass die bei einem Rückhaltefall auftretenden Gurtkraftbelastungen direkt in den Fahrzeugaufbau eingeleitet werden und nicht vom Fahrzeugsitz selbst aufgenommen werden müssen. Dieser kann dementsprechend deutlich geringer dimensioniert ausgelegt und so insbesondere auch in Leichtbauweise erstellt werden. Als Vorteil der gattungsgemäßen Konstruktion ist weiterhin zu nennen, dass am Fahrzeugsitz befestigte Gurtschlösser stets bei einer Sitzverstellung mitbewegt werden und so jeweils die für den Rückhaltefall optimale Position zum Fahrzeuginsassen gewährleistet ist. Darüber hinaus ist bei der DE-38 29 824-A1 noch als Vorteil zu erwähnen, dass das Halteteil für das Gurtschloss stets eine vorbestimmte Winkellage einnimmt und damit für den Fahrzeuginsassen beim Einfädeln der Sicherheitsgurtlasche immer eine klare Orientierung gegeben ist.

Die gattungsgemäße FR-A-247 17 93 zeigt eine Vorrichtung zur Befestigung eines Sicherheitsgurtes an einem längs- und/oder höhenverstellbaren Fahrzeugsitz mit einem am Fahrzeugsitz vorgesehenen hinteren Sitzbein. Die Vorrichtung weist weiter ein Halteteil zur Aufnahme eines dem Sicherheitsgurt zugeordneten Funktionsteils und ein in einer fahrzeugfesten Rastschiene verrastbares Rastelement auf, das am Fahrzeugsitz zumindest mittelbar schwenkbar angelenkt und über das Halteteil betätigbar ist, wobei das Rastelement hinter seinem sich durch die schwenkbare Anlenkung ergebenden Drehpunkt in Richtung Fahrzeugsitzrückseite weisend angeordnet ist. Ferner ist ein Deformationsglied vorgesehen, das unter Einwirkung einer am Halteteil eingeleiteten Gurtkraft nachgiebig ist und welches in einer Ruhestellung das Rastelement gegenüber der Rastschiene außer Eingriff hält und bei Überschreitung einer vorgegebenen Gurtkraft zur Verrastung des Rastelements in der Rastschiene nachgibt.

Konkret ist hier die Vorrichtung zur Befestigung des Sicherheitsgurtes in Richtung Fahrzeugsitzrückseite gesehen hinter einem hinteren Sitzbein, d.h. außerhalb des Längenbereichs zwischen den vorderen Sitzbeinen und den hinteren Sitzbeinen angeordnet. Nachteilig bei dieser Anordnung ist, dass zur Verrastung des durch Rastzähne gebildeten Rastelements mit der Rastschiene hier eine im Wesentlichen vertikale Aufwärtsbewegung erforderlich ist, um die Rastzähne in Eingriff mit der Rastschiene zu bringen. Da der Sicherheitsgurt im angelegten Zustand im Befestigungsbereich an der Rastschiene erheblich gegen die Vertikale geneigt ist, ist zur Verrastung der Rastzähne in der Rastschiene eine sehr hohe Gurtkraft erforderlich. Aufgrund dieser für eine Verrastung erforderlichen hohen Gurtkraft besteht die Gefahr, dass insbesondere bei weniger hohen Gurtkräften keine erwünschte Verrastung der Rastzähne in der Rastschiene erfolgt, was die Funktionssicherheit eines derartigen Aufbaus erheblich reduziert.

Insgesamt ergeben sich hier somit relativ große Übersetzungsverluste bei der Einsteuerung eines Rastelements in die Rastschiene.

Aufgabe der Erfindung ist es daher, eine Vorrichtung zur Befestigung eines Sicherheitsgurtes an einem längs- und/oder höhenverstellbaren Fahrzeugsitz vorzusehen, mit der eine Verrastung zwischen einem Rastelement und einer Rastschiene insbesondere auch bei weniger hohen Gurtkräften, auf gute und funktionssichere Weise möglich ist.

Diese Aufgabe wird gelöst mit den Merkmalen des Patentanspruchs 1.

Gemäß Patentanspruch 1 ist das Rastelement zwischen seinem Drehpunkt und dem hinteren Sitzbein angeordnet.

Bei einer derartigen Anordnung des Rastelements zwischen seinem sich durch die schwenkbare Anlenkung ergebenden Drehpunkt und dem hinteren Sitzbein wird erreicht, dass bei einem Rückhaltefall die auf das Halteteil einwirkende Gurtkraft in etwa in Richtung des Rastelementes wirkt, wodurch sich ohne Übersetzungsverluste eine direkte Einsteuerung des Rastelementes in die Rastschiene ergibt. Das heißt, dass die Wirklinie der Gurtkraft bei dieser Anordnung im Wesentlichen direkt durch das Rastelement hindurchläuft und zudem genau in Richtung der Rastbewegung verläuft, so dass keine Kraftübertragungsverluste auftreten können, wenn das Rastelement zur Verrastung mit der Rastschiene durch die Gurtkraft aufwärts bewegt wird. Zudem wird hier ein sehr günstiger kurzer Schwenkhebel realisierbar.

Mit dieser Anordnung kann auch für relativ weit hinten angeordnete Gurtschlösser ein sehr kurzer Schwenkhebel realisiert werden, der einenends in dem Drehpunkt gelagert ist und anderenends eine Ausnehmung zur Aufnahme des Rastelementes aufweist oder selbst Träger des Rastelementes ist. Zudem sorgt der sehr kurze Hebelarm dafür, dass durch das Eigengewicht des Halteteils keine allzu großen Auslenkungen am Schwenkhebel auftreten können, wenn gemäß Patentanspruch 2 ein elastisch ausgeführtes Deformationsglied vorgesehen ist. Der Abstand zwischen dem Rastelement und der Rastschiene in der Ruhestellung kann auf diese Weise sehr eng gewählt werden. Es ist im Belastungsfall also nur ein äußerst kleiner Leerweg zu überbrücken.

Vorteilhaft ist gemäß Patentanspruch 2 ein elastisch ausgeführtes Deformationsglied vorgesehen, das in einer fahrzeugsitzfesten Haltetasche gehalten ist. In dieser befindet sich auch der Drehpunkt für das Rastelement. Dessen Steuerung erfolgt durch einen Schwenkhebel, der mit dem Deformationsglied wirkverbunden ist. In einer besonders vorteilhaften Ausführung ist das Deformationsglied ein elastischer Gummipuffer, der nach Art eines Polygon-Torus gebildet und aus einem Gummiwerkstoff hergestellt ist. Das bevorzugt als Quadrat ausgeführte Polygon ist hinsichtlich seiner Außenkonturen so bemessen, dass es ohne weiteres in eine entsprechend konturierte Haltetasche einsetzbar ist und andererseits auch innen ein Vierkant-Lagerelement für den Schwenkhebel aufnehmen kann. Für die Einsteuerung des bevorzugt nockenförmig ausgeführten Rastelementes ist also nur der Zusammenbau einiger Kleinteile notwendig, die sich als Massengüter preisgünstig herstellen lassen. Die gemäß Patentanspruch 1 gewählte Kinematik ermöglicht also auch eine gewichtssparende Bauweise, weil einzelne Elemente der gesamten Vorrichtung insbesondere im Zusammenhang mit der Einsteuerung des Rastelementes sehr klein ausgeführt werden können.

Ein weiterer Vorteil der Vorrichtung gemäß Patentanspruch 2 ist darin zu sehen, dass beispielsweise nach einer Vollbremsung die Einsteuerung des Rastelementes in die Rastschiene wieder rückgängig gemacht wird, sobald die Gurtkraft nachlässt. Das Halteteil für das Gurtschloss (oft auch Gurtpeitsche genannt) wird also wieder in seine Ausgangsstellung zurückgesetzt. Im Vergleich zu konventionellen Sitzen können außerdem in der Führungsschiene untergebrachte Gummipuffer entfallen. Durch diese Maßnahme wird die Längsverstellkraft der Vordersitze gesenkt. Der Komfort wird also durch diese Maßnahme auch verbessert.

Von besonderer Bedeutung für die Montage der erfindungsgemäßen Vorrichtung ist die Lösung gemäß Patentanspruch 3. Diese sieht vor, dass das Deformationsglied für den Schwenkhebel wie ein Drehlager wirkt und zumindest mit diesem zusammen zu einem Vormontagesatz zusammengefasst ist. Dabei kann zur verliersicheren Befestigung des Deformationsgliedes dieses beispielsweise an dem Schwenkhebel selbst oder an einem dem Schwenkhebel zugeordneten Einbauteil anvulkanisiert sein.

Weitere vorteilhafte Ausgestaltungen der Erfindung sind Gegenstand der Patentansprüche 4 bis 14.

Ein besonders vorteilhaftes Ausführungsbeispiel ist in der Zeichnung dargestellt. Es zeigt
- Figur 1:: in einer Seitenansicht wesentliche Elemente der erfindungsgemäßen Vorrichtung,
- Figur 2:: eine Ansicht gemäß Schnitt II - II in Figur 1,
- Figur 3:: eine perspektivische Ansicht für ein Fahrzeugsitzgestell, an dem die erfindungsgemäße Vorrichtung befestigt ist,
- Figuren 4/5:: einen Schwenkhebel in unterschiedlichen Ansichten,
- Figuren 6/7:: ein Rastelement in unterschiedlichen Ansichten,
- Figuren 8/9:: ein elastisches Deformationsglied in unterschiedlichen Ansichten.

Gleiche Bauteile weisen in allen Figuren die gleiche Bezifferung auf.

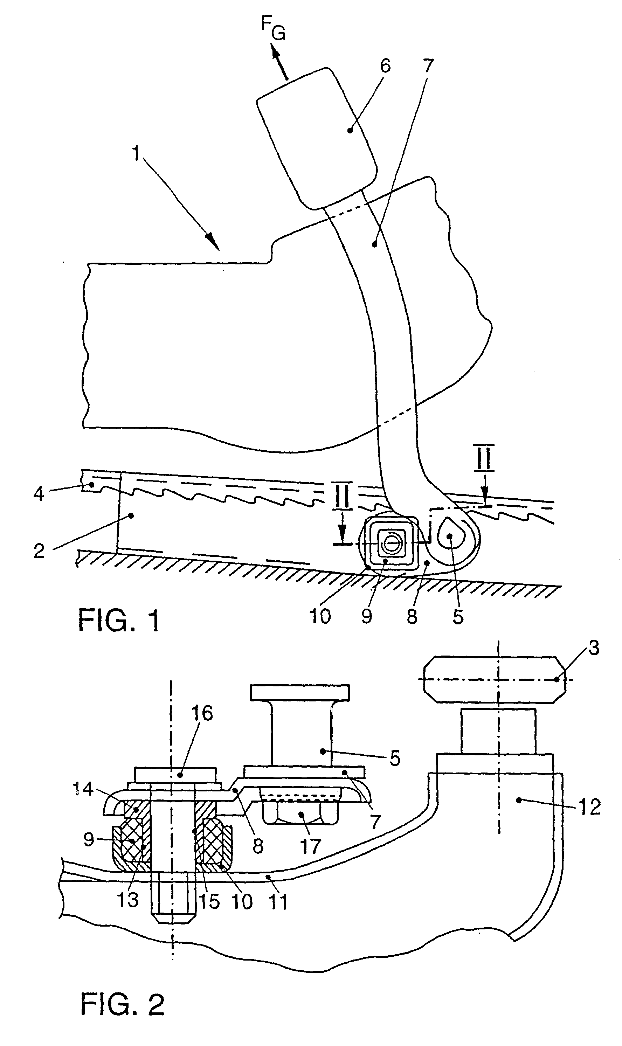

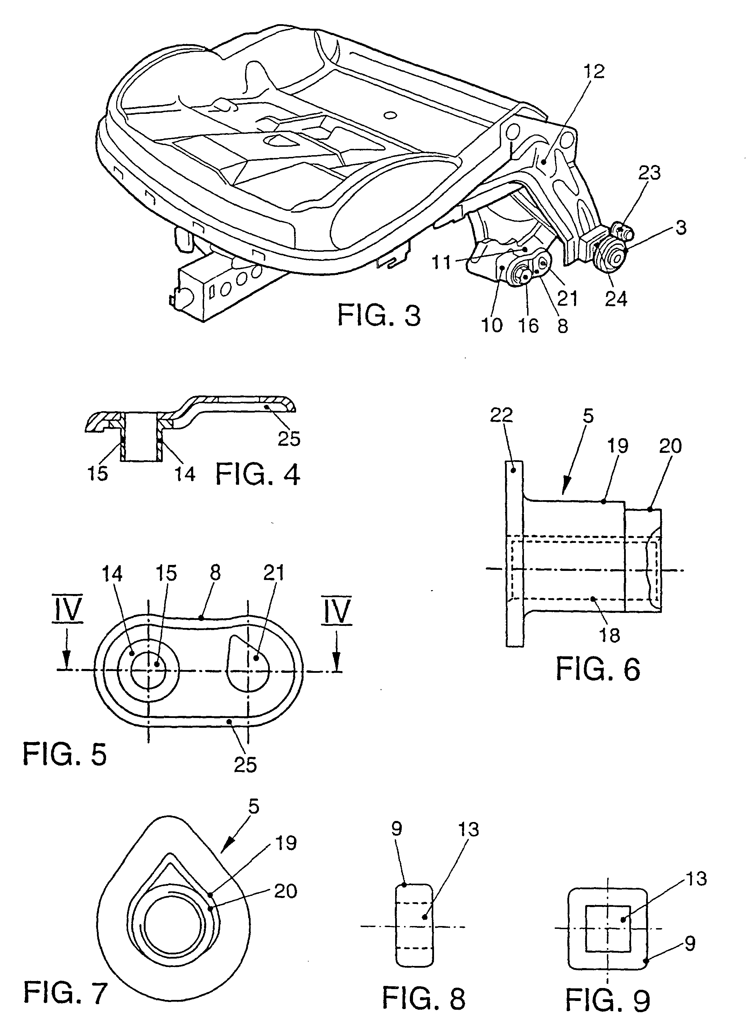

Man erkennt in Figur 1 einen ausschnittsweise dargestellten Fahrzeugsitz 1 in einer Seitenansicht. Dieser ist entlang einer Führungsschiene 2 über eine Rolle 3 (siehe Figur 3) oder mittels eines üblicherweise auch verwendeten Gleitschuhs längsverstellbar. Integraler Bestandteil der Führungsschiene 2 ist eine hier sägezahnartig ausgeführte Rastschiene 4, in welcher ein hier nockenartig ausgeführtes Rastelement 5 arretierbar ist, wenn an einem Gurtschloss 6, das auf einem Halteteil 7 befestigt ist, bei einer Vollbremsung oder während einer Unfallsituation eine vorgegebene Gurtkraft F_{G} überschritten wird. Weitere wesentliche Bestandteile der erfindungsgemäßen Vorrichtung sind ein Schwenkhebel 8, ein Deformationsglied 9, und eine Haltetasche 10 (siehe hierzu auch Figur 2). Letztere ist auf einem Lagerbock 11 befestigt, der einem hinteren Sitzbein 12 zugeordnet und hier als dessen integraler Bestandteil ausgeführt ist. Die hier als erstes Polygonprofil nach Art eines Vierkanttopfes ausgeführte Haltetasche ist beispielsweise durch CO ₂-Schweißen oder Buckelschweißen auf dem Lagerbock 11 befestigt. Dieser Vierkanttopf nimmt das entsprechend profilierte Deformationsglied 9 (siehe hierzu auch die Figuren 8, 9) auf. In eine Innenvierkantausnehmung 13 ist als zweites Polygonprofil eine ebenfalls vierkantförmig konturierte Lagerhülse 14 eingepasst, die nach Art eines Eingriffstückes ihrerseits mit dem Schwenkhebel 8 fest verbunden ist und innenseitig eine Durchgangsbohrung 15 aufweist. Diese wird durchsetzt von einer Befestigungsschraube 16. Eine weitere Befestigungsschraube 17 ist in ein Gewinde 18 (siehe Figuren 6 und 7) des Rastelementes 5 eingedreht. Letzteres weist einen ersten Nockeneingriffsabschnitt 19, der in der Rastschiene 4 arretierbar ist, und einen demgegenüber verkleinerten zweiten Nockeingriffsabschnitt 20 auf, der formschlüssig in eine entsprechend konturierte Ausnehmung 21 des Schwenkhebels 8 (siehe hierzu Figuren 4 und 5) eingepasst ist. Ein umlaufender Halteflansch 22 (siehe Figuren 6 und 7) verhindert ein Herausdrehen aus der fahrzeugseitig angebrachten Rastschiene 2, und zwar insbesondere im Hinblick auf eine Begrenzung der Querbewegungen. Es wird auf diese Weise auch verhindert, dass das Halteteil 7 Kippbewegungen um den Schwenkhebel 8 ausführen kann.

Auch die Ansicht in Figur 3 lässt erkennen, dass das in die Ausnehmung 21 einsetzbare Rastelement 5 zwischen einem innerhalb der Haltetasche 10 liegenden Drehpunkt und einem hinteren Sitzbein 12 angeordnet ist. Das Halteteil 7 (siehe Figur 1) ist dabei so ausgeführt, dass in einem typischen Belastungsfall die Gurtkraft F_{G} so gerichtet ist, dass ihre Wirklinie im wesentlichen durch das Rastelement 5 hindurchläuft. Verbunden mit dem äußerst kurz gehaltenen Schwenkhebel 8 ergeben sich somit keinerlei Übersetzungsverluste, wenn das Rastelement 5 durch Zusammenquetschen des Deformationsgliedes 9 nach oben in Richtung der Rastschiene 4 bewegt wird. Bei einem beispielsweise aus Gummi hergestellten Deformationsglied 9 wird das Rastelement 5 aus der Rastschiene 4 wieder selbsttätig außer Eingriff gebracht, wenn die Gurtbelastung nachlässt. Es ergibt sich dann wieder eine Ruhestellung, die eine problemlose Längsverstellung des Fahrzeugsitzes 1 innerhalb der Führungsschiene 2 ermöglicht.

Bei dem in Figur 3 dargestellten Ausführungsbeispiel ist der Rolle 3 noch eine Andruckrolle 23 zugeordnet, die in einer zweiten Haltetasche 24 ebenfalls mit einem hier nicht weiter dargestellten Deformationsglied gelagert ist. Dieses weitere Deformationsglied und auch die Haltetasche 23 können gemäß einer besonders vorteilhaften Weiterbildung der Erfindung baugleich ausgeführt werden, so dass für beide Funktionen preisgünstig identische Einzelteile hergestellt werden können.

Bei der Lagerung des Schwenkhebels 8 mittels des elastisch ausgeführten Deformationsgliedes 9 ist als besonderer Vorteil anzusehen, dass mit leicht herstellbaren Kleinteilen ohne großen Montageaufwand ein Drehpunkt für das Rastelement 5 realisiert werden kann.

Im Hinblick auf die Montage von besonderer Bedeutung ist, dass zumindest aus dem Deformationsglied 9, der Lagerhülse 14 und dem Schwenkhebel 8 ein Vormontagesatz gebildet werden kann. Zur weiteren Vereinfachung können dem Montagesatz aber auch noch das Rastelement 5 und das Halteteil 7 samt Gurtschloss 6 zugeordnet werden. Dieser relative große Bauteileumfang wird dann komplett mittels Verschraubung an dem Lagerbock 11 bzw. Sitzbein 12 befestigt.

Vorstellbar ist als Unterzusammenbau auch eine Zusammenfassung der Elemente Haltetasche 10, Lagerhülse 14 und Deformationsglied 9. Letzteres kann beispielsweise hier vorzugsweise metallisch ausgeführte Bauteile durch direktes Anvulkanisieren fest miteinander verbinden. Über eine Befestigungsschraube 16 kann dann die Haltetasche 10 gegen den Lagerbock 11 gespannt werden. Der Schwenkhebel 8 ist dabei so an der Lagerhülse 14 befestigt, dass er ohne weiteres freigängig ist.

Zur Erzeugung einer ausreichenden Stabilität weist der Schwenkhebel 8 einen umlaufenden Halteflansch 25 auf, der in einem hier nicht weiter bezifferten Fußbereich abgerundet ist und so für das montierende Personal ohne Verletzungsgefahr handhabbar ist.

Denkbar ist auch eine Befestigung der Haltetasche 10 direkt auf dem Sitzbein 12. Im übrigen kann auch hinsichtlich der Befestigung des Rastelementes 5 eine kinematische Umkehr vorgenommen werden. Dieses ist beispielsweise in einem hier nicht gezeigten Ausführungsbeispiel am Schwenkhebel 8 befestigt und greift in eine entsprechend konturierte Ausnehmung des Halteteils 7 ein.

## Patentansprüche

1. Vorrichtung zur Befestigung eines Sicherheitsgurtes an einem längs- und/oder höhenverstellbaren Fahrzeugsitz mit
- einem am Fahrzeugsitz vorgesehenen hinteren Sitzbein (12),
- einem Halteteil (7) zur Aufnahme eines dem Sicherheitsgurt zugeordneten Funktionsteils (6),
- einem in einer fahrzeugfesten Rastschiene (4) verrastbaren Rastelement (5), das am Fahrzeugsitz (1) zumindest mittelbar schwenkbar angelenkt und über das Halteteil (7) betätigbar ist, wobei das Rastelement (5) hinter seinem sich durch die schwenkbare Anlenkung ergebenden Drehpunkt in Richtung Fahrzeugsitzrückseite weisend angeordnet ist,
- einem Deformationsglied (9), das unter Einwirkung einer am Halteteil (7) eingeleiteten Gurtkraft nachgiebig ist, und welches in einer Ruhestellung das Rastelement (5) gegenüber der Rastschiene (4) außer Eingriff hält und bei Überschreitung einer vorgegebenen Gurtkraft zur Verrastung des Rastelementes (5) in der Rastschiene (4) nachgibt,
**dadurch gekennzeichnet,**
**dass** das Rastelement (5) zwischen seinem Drehpunkt und dem hinteren Sitzbein (12) angeordnet ist.

2. Vorrichtung nach Anspruch 1, **dadurch gekennzeichnet,**
**dass** das Deformationsglied (9) elastisch ausgeführt und in einer fahrzeugsitzfesten Haltetasche (10) gehalten ist,
**dass** der sich aus der schwenkbaren Anlenkung ergebende Drehpunkt innerhalb der Haltetasche (10) angeordnet ist, und
**dass** ein der Steuerung des Rastelementes (5) dienender und im Bereich des Drehpunktes angelenkter Schwenkhebel (8) mit dem Deformationsglied (9) wirkverbunden ist.

3. Vorrichtung nach Anspruch 1 oder Anspruch 2, **dadurch gekennzeichnet, dass** das Deformationsglied (9), eine dem Drehpunkt zugeordnete Lagerhülse (14) und ein die Lagerhülse (14) haltender Schwenkhebel (8) als Vormontagesatz ausgebildet sind.

4. Vorrichtung nach wenigstens einem der Ansprüche 1 bis 3, **dadurch gekennzeichnet, dass** das Rastelement (5) nockenförmig ausgebildet ist.

5. Vorrichtung nach wenigstens einem der Ansprüche 1 bis 4, **dadurch gekennzeichnet, dass** das Rastelement (5) dem Halteteil (7) zugeordnet ist.

6. Vorrichtung nach wenigstens einem der Ansprüche 2 bis 5, **dadurch gekennzeichnet, dass** das Rastelement (5) dem Schwenkhebel (8) zugeordnet ist.

7. Vorrichtung nach Anspruch 6, **dadurch gekennzeichnet, dass** an dem Schwenkhebel (8) eine das Rastelement (5) formschlüssig aufnehmende Ausnehmung (21) vorgesehen ist.

8. Vorrichtung nach einem der Ansprüche 1 bis 7, **dadurch gekennzeichnet, dass** an dem Halteteil (7) eine das Rastelement (5) formschlüssig aufnehmende Ausnehmung (21) vorgesehen ist.

9. Vorrichtung nach wenigstens einem der Ansprüche 2 bis 8, **dadurch gekennzeichnet, dass**
- die Haltetasche (10) zumindest innenwandig nach Art eines ersten Polygonprofils gebildet ist,
- das Deformationsglied (9) eine dem ersten Polygonprofil entsprechende Außenkontur aufweist und in die Haltetasche (10) formschlüssig einsetzbar ist,
- als Drehlager innerhalb des Deformationsgliedes (9) ein zweites Polygonprofil vorgesehen ist, in das ein entsprechend konturiertes und mit dem Schwenkhebel (8) verbundenes Eingriffsstück (14) einsetzbar ist.

10. Vorrichtung nach einem der Ansprüche 4 bis 9, **dadurch gekennzeichnet, dass** an dem nockenförmigen Rastelement (5) ein erster Nockeneingriffsabschnitt (19) für die Rastschiene (4) und ein zweiter Nockeneingriffsabschnitt (20) zur Unterbringung in einer das Rastelement (5) formschlüssig aufnehmenden Ausnehmung (21) vorgesehen ist.

11. Vorrichtung nach einem der Ansprüche 4 bis 10, **dadurch gekennzeichnet, dass** das nockenförmige Rastelement (5) von einer Gewindebohrung (18) durchsetzt ist.

12. Vorrichtung nach einem der Ansprüche 4 bis 11, **dadurch gekennzeichnet, dass** an dem nockenförmigen Rastelement (5) ein umlaufender Halteflansch (22) angeformt ist, der ebenfalls eine Nockenkontur aufweist.

13. Vorrichtung nach wenigstens einem der Ansprüche 2 bis 12, **dadurch gekennzeichnet, dass** der Schwenkhebel (8) ein Blechformteil mit einem aufgestellten Rand (25) ist, der umlaufend ausgeführt und im Fußbereich gerundet ist.

14. Vorrichtung nach Anspruch 13, **dadurch gekennzeichnet, dass** zur formschlüssigen Aufnahme des Rastelementes (5) und/oder von Elementen des Drehpunkts (14) durch Stanzung erzeugt Ausnehmungen in dem Blechformteil (8) vorgesehen sind.

## Claims

1. Device for fastening a safety belt on a longitudinally adjustable and/or height-adjustable vehicle seat, having
- a rear seat leg (12) provided on the vehicle seat,
- a retaining part (7) for receiving a functional part (6) assigned to the safety belt,
- a latching element (5) which can be latched in a latching rail (4), which is fixed to the vehicle, is articulated pivotably at least indirectly on the vehicle seat (1) and can be actuated via the retaining part (7), the latching element (5) being arranged behind the pivot point, which is obtained by the pivotable articulation, so as to be oriented in the direction of the rear of the vehicle seat,
- a deformation element (9) which is compliant under the action of a belt force introduced into the retaining part (7), which, in a rest position, keeps the latching element (5) out of engagement with the latching rail (4) and which, when a predetermined belt force is exceeded, yields in order for the latching element (5) to latch in the latching rail (4),
**characterized in that** the latching element (5) is arranged between its pivot point and the rear seat leg (12).

2. Device according to Claim 1, **characterized in that** the deformation element (9) is designed elastically and is retained in a retaining pocket (10) fixed to the vehicle seat, **in that** a pivot point which is obtained from the pivotable articulation is arranged within the retaining pocket (10), and **in that** a pivot lever (8) which serves to control the latching element (5) and is articulated in the region of the pivot point is operatively connected to the deformation element (9).

3. Device according to Claim 1 or Claim 2, **characterized in that** the deformation element (9), a bearing sleeve (14) assigned to the pivot point, and a pivot lever (8) retaining the bearing sleeve (14) are designed as a preassembly set.

4. Device according to at least one of Claims 1 to 3, **characterized in that** the latching element (5) is designed in the form of a cam.

5. Device according to at least one of Claims 1 to 4, **characterized in that** the latching element (5) is assigned to the retaining part (7).

6. Device according to at least one of Claims 2 to 5, **characterized in that** the latching element (5) is assigned to the pivot lever (8).

7. Device according to Claim 6, **characterized in that** a recess (21) which receives the latching element (5) in a positively locking manner is provided on the pivot lever (8).

8. Device according to one of Claims 1 to 7, **characterized in that** a recess (21) which receives the latching element (5) in a positively locking manner is provided on the retaining part (7).

9. Device according to at least one of Claims 2 to 8, **characterized in that**
- at least the inner wall of the retaining pocket (10) is formed in the manner of a first polygon profile,
- the deformation element (9) has an outer contour corresponding to the first polygon profile and can be inserted into the retaining pocket (10) in a positively locking manner,
- a second polygon profile is provided as pivot bearing within the deformation element (9), it being possible to insert into said second polygon profile a correspondingly contoured engagement piece (14) which is connected to the pivot lever (8).

10. Device according to one of Claims 4 to 9, **characterized in that** there are provided on the cam-like latching element (5) a first cam engagement section (19) for the latching rail (4) and a second cam engagement section (20) for accommodating a recess (21), which receives the latching element (5) in a positively locking manner.

11. Device according to one of Claims 4 to 10, **characterized in that** a threaded bore (18) passes through the cam-like latching element (5).

12. Device according to one of Claims 4 to 11, **characterized in that** there is integrally formed on the cam-like latching element (5) a peripheral retaining flange (22), which likewise has a cam contour.

13. Device according to at least one of Claims 2 to 12, **characterized in that** the pivot lever (8) is a shaped sheet-metal part with an upright border (25) which runs around the periphery and is rounded in the bottom region.

14. Device according to Claim 13, **characterized in that** recesses produced by punching are provided in the shaped sheet-metal part (8) in order to receive the latching element (5) and/or elements of the pivot point (14) in a positively locking manner.

## Revendications

1. Dispositif de fixation d'une ceinture de sécurité à un siège de véhicule réglable en longueur et en hauteur, avec
- un pied de siège (12) prévu à l'arrière du siège de véhicule,
- une pièce de support (7) destinée à recevoir une pièce fonctionnelle (6) associée à la ceinture de sécurité,
- un élément de cliquet (5) à encliqueter dans un rail à crans (4) fixé au véhicule, qui est articulé au siège de véhicule (1) d'une façon au moins indirectement pivotante et qui peut être actionné par la pièce de support (7), l'élément de cliquet (5) étant disposé derrière son point de rotation résultant de l'articulation pivotante en regardant en direction du dos du siège de véhicule,
- un organe de déformation (9), qui est flexible sous l'action d'un effort appliqué par la ceinture sur la pièce de support (7), et qui en position de repos maintient l'élément de cliquet (5) hors d'engagement par rapport au rail à crans (4) et se déforme en cas de dépassement d'un effort de ceinture prédéterminé pour encliqueter l'élément de cliquet (5) dans le rail à crans (4),
**caractérisé en ce que**
l'élément de cliquet (5) est disposé entre son point de rotation et le pied arrière (12) du siège.

2. Dispositif suivant la revendication 1, **caractérisé en ce que** l'organe de déformation (9) est élastique et est maintenu dans une logette de maintien (10) fixe par rapport au siège de véhicule, **en ce que** le point de rotation résultant de l'articulation pivotante est disposé à l'intérieur de la logette de maintien (10), et **en ce qu'**un levier pivotant (8) servant à la commande de l'élément de cliquet (5) et articulé dans la région du point de rotation est en liaison active avec l'organe de déformation (9).

3. Dispositif suivant la revendication 1 ou la revendication 2, **caractérisé en ce que** l'organe de déformation (9), une douille de palier (14) associée au point de rotation et un levier pivotant (8) maintenant la douille de palier (14) se présentent sous la forme d'un ensemble préassemblé.

4. Dispositif suivant au moins une des revendications 1 à 3, **caractérisé en ce que** l'élément de cliquet (5) est réalisé en forme de came.

5. Dispositif suivant au moins une des revendications 1 à 4, **caractérisé en ce que** l'élément de cliquet (5) est associé à la pièce de support (7).

6. Dispositif suivant au moins une des revendications 2 à 5, **caractérisé en ce que** l'élément de cliquet (5) est associé au levier pivotant (8).

7. Dispositif suivant la revendication 6, **caractérisé en ce qu'**il est prévu sur le levier pivotant (8) un évidement (21) recevant par emboîtement l'élément de cliquet (5).

8. Dispositif suivant l'une quelconque des revendications 1 à 7, **caractérisé en ce qu'**il est prévu sur la pièce de support (7) un évidement (21) recevant par emboîtement l'élément de cliquet (5).

9. Dispositif suivant au moins une des revendications 2 à 8, **caractérisé en ce que**
- la logette de maintien (10) est configurée, au moins dans sa paroi intérieure, à la manière d'un premier profil polygonal,
- l'organe de déformation (9) présente un contour extérieur correspondant au premier profil polygonal et peut être introduit par emboîtement dans la logette de maintien (10),
- il est prévu, comme palier de rotation à l'intérieur de l'organe de déformation (9), un second profil polygonal dans lequel peut être introduite une pièce d'engrènement (14) présentant un contour correspondant et reliée au levier pivotant (8).

10. Dispositif suivant l'une quelconque des revendications 4 à 9, **caractérisé en ce qu'**il est prévu sur l'élément de cliquet (5) en forme de came une première portion (19) d'engrènement de came pour le rail à crans (4) et une seconde portion (20) d'engrènement de came à introduire dans un évidement (21) recevant par emboîtement l'élément de cliquet (5).

11. Dispositif suivant l'une quelconque des revendications 4 à 10, **caractérisé en ce que** l'élément de cliquet (5) en forme de came est traversé par un alésage fileté (18).

12. Dispositif suivant l'une quelconque des revendications 4 à 11, **caractérisé en ce qu'**une bride de maintien périphérique (22), qui présente également un contour de came, est façonnée sur l'élément de cliquet (5) en forme de came.

13. Dispositif suivant au moins une des revendications 2 à 12, **caractérisé en ce que** le levier pivotant (8) est une pièce façonnée en tôle avec un bord relevé (25), qui est réalisé en périphérie et qui est arrondi dans la région du pied.

14. Dispositif suivant la revendication 13, **caractérisé en ce qu'**il est prévu des évidements produits par estampage dans la pièce façonnée en tôle (8) pour recevoir par emboîtement l'élément de cliquet (5) et/ou des éléments du point de rotation (14).
